# EUROPEAN PATENT APPLICATION

(11) **EP 3 438 492 A1**
(43) Date of publication of application: **06.02.2019**
(21) Application number: 17425087.8
(22) Date of filing: 04.08.2017
(51) Int. Cl.: F16D 69/00, F16D 65/12, F16D 13/72, F16D 13/52, F16D 13/64, F16D 65/02

(54) **DISC AND DISC PACK FOR A CLUTCH ASSEMBLY**

(71) Applicant: S.K. Wellman S.R.L., 25034 Orzinuovi (IT)
(72) Inventor: Gamba, Alessandro, 25034 Orzinuovi (IT)
(74) Representative: Gamba, Alessandro

(57) **Abstract**

A disc pack (10) for a clutch assembly or for a multidisc brake comprises a plurality of driven discs (20) and a plurality of driving discs (30) each comprising a metal body (21,31) having a working portion (23,33) with a friction zone (234,334) coated by a friction coating (40) and an adjacent free zone (230,330) devoid of friction coating. In particular, both faces (A,B) of the driven disc (20) and of the driving disc (30) are provided with a friction zone (234,334) coated with a friction coating (40), and in a pair composed of a driven disc (20) and a driving disc (30), the respective friction zones (234,334) are arranged offset in such a way that the friction zone (234) of the driven disc (20) faces the free zone (330) of the driving disc (30), and the friction zone (334) of the driving disc (30) faces the free zone (230) of the driven disc (20).

## Description

The object of the present invention is a disc pack for a clutch assembly for motor vehicles, tractors and earth moving machines.

As is known, clutches generally consist of a driving component connected to the crankshaft and a driven component connected to the primary shaft of the gearbox. The driving component of the clutch is generally composed of a bell that takes the motion from the pinion of the crankshaft via a crown gear. The bell is equipped with specially machined seats, where the teeth of the driving discs are engaged. The driven component of the clutch is generally composed of a hub connected to the primary shaft of the gearbox by a spline. On the outer diameter of the hub, toothing is made wherein the driven discs engage. The driving and driven discs are positioned inside the clutch assembly alternately to form a disc pack 1. The driving and driven discs are engaged to carry out the transmission of the torque via the axial movement of a piston which is usually hydraulically driven.

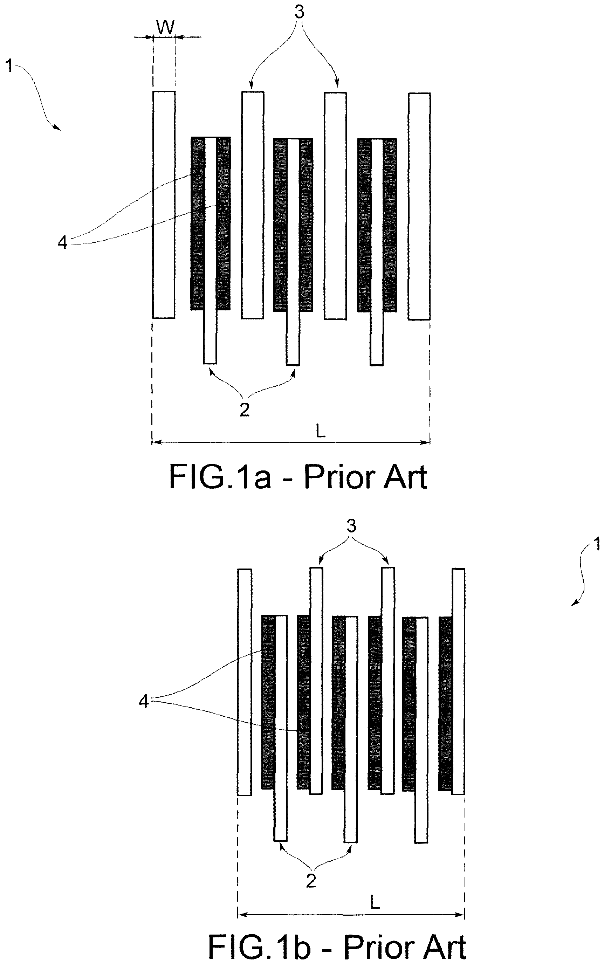

As shown in figures 1A and 1B, which show known examples of a disc pack 1, the driven discs 2 (internally toothed) alternate with the driving discs 3 (externally toothed).

In the embodiment of figure 1A, a friction material 4 is fixed on both sides of the driven disc 2, while the driving disc 3 is completely devoid of friction material. In this type of configuration known as a "double-sided clutch", a friction is caused between the surface with the friction material of the driven disc 2 and the metal surface of the driving disc 3. Such friction, which allows the transmission of the torque, produces heat at the engagement surfaces between the discs, heat which moves mainly towards the driving disc 3. This heat is dissipated through the steel mass of the discs themselves.

In order to improve heat dissipation and reduce the temperature of the disc pack 1, the solution of increasing the thickness w of such conducting disc 3 is well known (as shown in figure 1). However, the increase in the thickness w of the driving disc 3 results in an increase in the axial length L of the disc pack 1. This effect is a significant drawback, as it prevents achieving the requirements of reducing the size and weight of the disc pack 1.

In the embodiment of figure 1B, a friction material 4 is fixed to only one side of the driven disc 2 and to only one side of the driving disc 3. The driven disc 2 and the driving disc 3 are arranged so that the surface with the friction material 4 of a first disc 2,3 faces the metal surface of the disc 3,2 next to it. In this type of configuration known as a single-sided clutch, the heat generated at the engagement surfaces between the discs may disperse both into the steel of the driven disc 2 and the driving disc 3, making it unnecessary to increase the thickness of the discs themselves. Such solution, shown in figure 1B, allows the axial length L of the disc pack 1 to be reduced while maintaining high heat dissipation performance with respect to the double-sided clutch solution of figure 1A. However, the single-sided clutch solution also has some drawbacks, including a high thermal instability and a consequent potential deformation of the discs 2,3 generated by the unidirectional heat flow into the steel.

The object of the present invention is to solve the problems of the known art taking into account the needs of the industry.

In particular, the object of the present invention is to provide a solution for a clutch disc pack that ensures high heat dissipation performance without deformation of the discs, minimizing the axial length of the disc pack itself.

Such object is achieved by a disc pack according to claim 1, as well as a disc according to claim 11, a clutch assembly according to claim 14 and a multidisc brake according to claim 15. The dependent claims describe preferred embodiments of the invention.

Further features and advantages of the discs and the disc pack will be apparent from the following detailed description, illustrated by way of non-limiting example in the appended figures wherein:
figures 1A and 1B show examples of a disc pack for a clutch of the known art, respectively an example of a double-sided clutch configuration (figure 1A) and an example of a single-sided clutch configuration (figure 1B) ;
figure 2 shows a disc pack according to the present invention in one embodiment;
figure 3 shows a disc pack according to the present invention, in a further embodiment;
figure 4 shows a disc pack according to the present invention in a still further embodiment;
figures 5A and 5B show a pair of discs of the disc pack of figure 2; in particular, figure 5A shows both faces (A) and (B) of the driven disc and figure 5B shows both faces (A) and (B) of the driving disc;
figures 6A and 6B show a pair of discs of the disc pack of figure 3; in particular, figure 6A shows both faces (A) and (B) of the driven disc and figure 6B shows both faces (A) and (B) of the driving disc;
figures 7A and 7B show a pair of discs of the disc pack of figure 4; in particular, figure 7A shows both faces (A) and (B) of the driven disc and figure 7B shows both faces (A) and (B) of the driving disc;
Figure 8 shows a clutch assembly utilizing a disc pack according to figure 2.

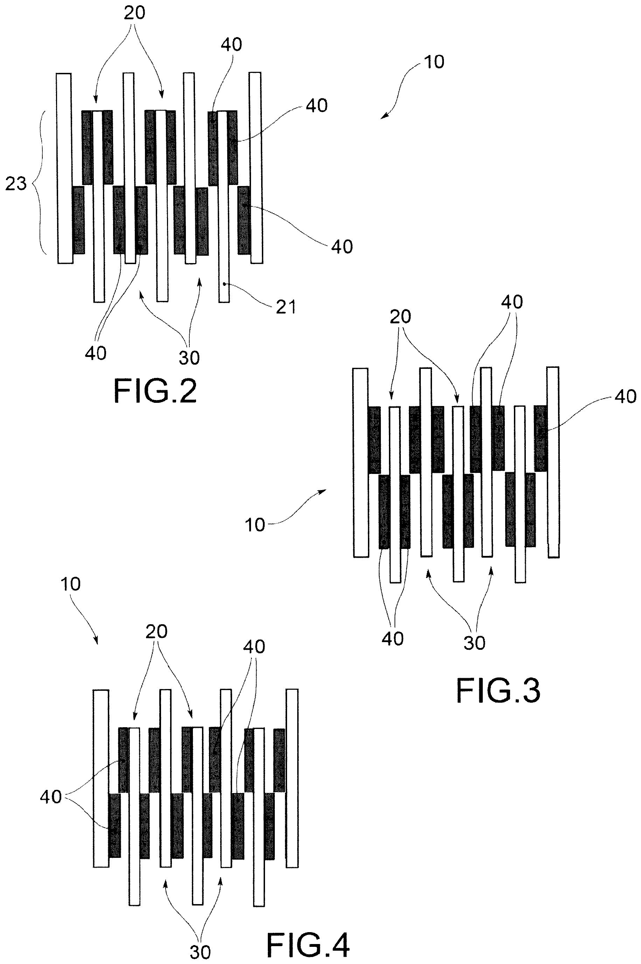

Referring to figures 2 to 4, a disc pack 10 for a clutch assembly according to the present invention is indicated collectively.

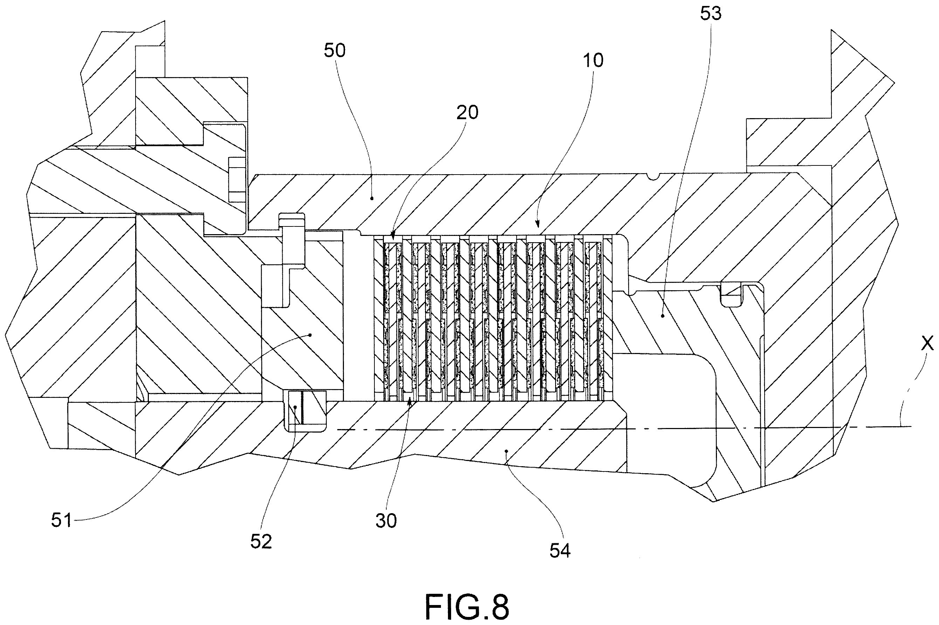

Figure 8 shows a schematic cross-sectional view of a clutch assembly comprising a disc pack 10 according to the configuration of figure 2. This figure shows the clutch assembly sectioned along a central axis X around which this assembly is symmetrical. The clutch assembly comprises a driving component of the clutch comprised of a bell 50 which takes the motion from the pinion of the crankshaft via a crown gear and encloses the internal components of the clutch. Within the bell 50 the driven component constituted by a hub 54 is arranged, connected to the primary shaft of the gearbox. A pressure plate 51 is coupled to an inner part of the bell 50, held in position by a grip ring 52. Still within the bell 50, a piston 53 is provided at one end. The bell 50, the hub 54, the pressure plate 51 and the piston 53 are common components of clutch assemblies and are known to a person skilled in the art.

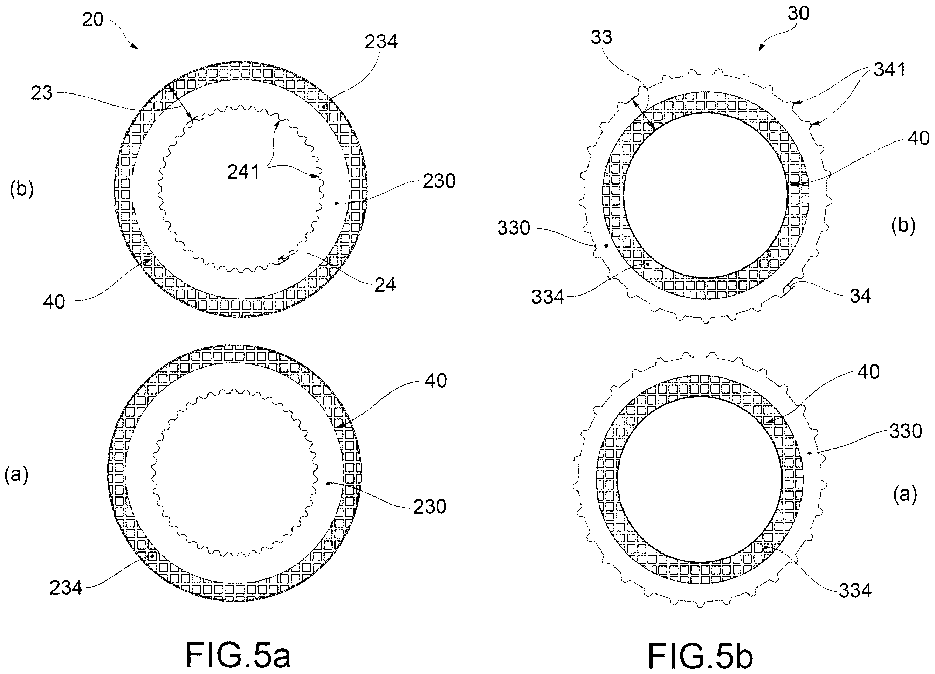

A plurality of driven discs 20 are coupled to the hub 54, each comprising a circular ring-shaped metal body 21. As shown in figures 5A, 6A, 7A, the body 21 of the driven disc 20 comprises a working portion 23 adapted to abut against a respective driving disc 30 and a connecting portion 24 adapted to engage with the hub 54. The body 21 thus comprises an internal toothing (i.e. protruding from the inner diameter of the driven disc 20) at the connecting portion 24, consisting of a plurality of teeth 241 adapted to insert into special seats provided on the hub 54 to hold the driven discs 20 in fixed positions (or rotations), permitting the axial movement of the same discs 20 relative to the hub 54.

Inside of the bell 50, a plurality of driving discs 30 are coupled, each comprising a circular ring-shaped metal body 31. As shown in figures 5B, 6B, 7B, the body 31 of the driving disc 30 comprises a working portion 33 adapted to abut against a respective driven disc 20 and a connecting portion 34 adapted to engage with the bell 50. The body 31 thus comprises an external toothing (i.e. protruding from the outer diameter of the driving disc 30) at the connecting portion 34, consisting of a plurality of teeth 341 adapted to be inserted into special seats provided in the bell 50 to hold the driving discs 30 in fixed positions (or rotations), permitting the axial movement of the same discs 30 relative to the bell 50.

Each disc 20,30 therefore comprises a connecting portion 24,34 provided with a toothing; the toothing (whether external or internal) is composed of a plurality of teeth or keys, tabs or eyelets. The toothing has preferably a regular distribution around the perimeter (whether inside or outside) of the disc itself.

When the clutch is not inserted, the driven discs 20 and the driving discs 30 are not in contact with each other; when the clutch is engaged, the driven discs 20 and the driving discs 30 are pressurized on contact (at the working portions 23,33) so that the torque may be transferred from the bell 50 to the hub 54 (or vice versa).

As shown in figures 2 to 4, the innovative aspect of the present invention is shown by the fact that both faces A and B, of the driven disc 20 as well as of the driving disc 30, are provided with a friction coating 40 which only partially coats the respective working portion 23,33. That is, each working portion 23,33 comprises a friction zone 234,334 coated by the friction coating 40 and an adjacent free zone 230,330 which is devoid of any friction coating. Obviously, this applies to the discs 20,30 inside the disc pack 10: it is quite obvious that the end discs 20',30' have a friction coating 40 only on the face A or B intended to meet an adjacent inner disc.

Note that the free zone 230,330 (devoid of any friction coating) of the working portion 23,33 is not to be confused with the grooves used in the friction coating 40 in the case of wet clutches (grooves shown, for example, in figures 5 to 7).

The free zone 230,330 (devoid of any friction coating) is a consecutive ring zone of the working portion 23,33 devoid of friction coating.

The free zone 230,330 (devoid of any friction coating) occupies a consistent portion of the working portion 23,33 (i.e., it is not just a groove in the friction coating).

Preferably, the free zone 230,330 (devoid of any friction coating) occupies between 30% and 70% of the working portion 23,33, preferably between 40% and 60%, and still more preferably 50%.

In the pair (shown in figures 5, 6, 7) comprising a driven disc 20 and a driving disc 30, the respective friction zones 234,334 are arranged offset in the respective working portion 23,33: i.e. the friction zone 234 of the driven disc 20 faces the free zone 330 of the driving disc 30, and the friction zone 334 of the driving disc 30 faces the free zone 230 of the driven disc 20.

Therefore, in the working area 23,33, the interface zones between the discs 20,30 are always composed of different materials: the friction coating 40 is always in contact with a metal surface (composed of the body 21,31 of the respective disc 20,30).

Commonly used materials for the body 21,31 are metallic materials, for example iron, or metal alloys, for example ferrous alloys such as steel or cast iron.

The materials commonly used for the friction coating 40 are paper-based, or organic material, or carbon compounds, or elastomeric or sintered materials (metallic and/or semi-metallic and/or graphite materials).

Both the friction zone 234,334 and the free zone 230,330 have a circular ring shape.

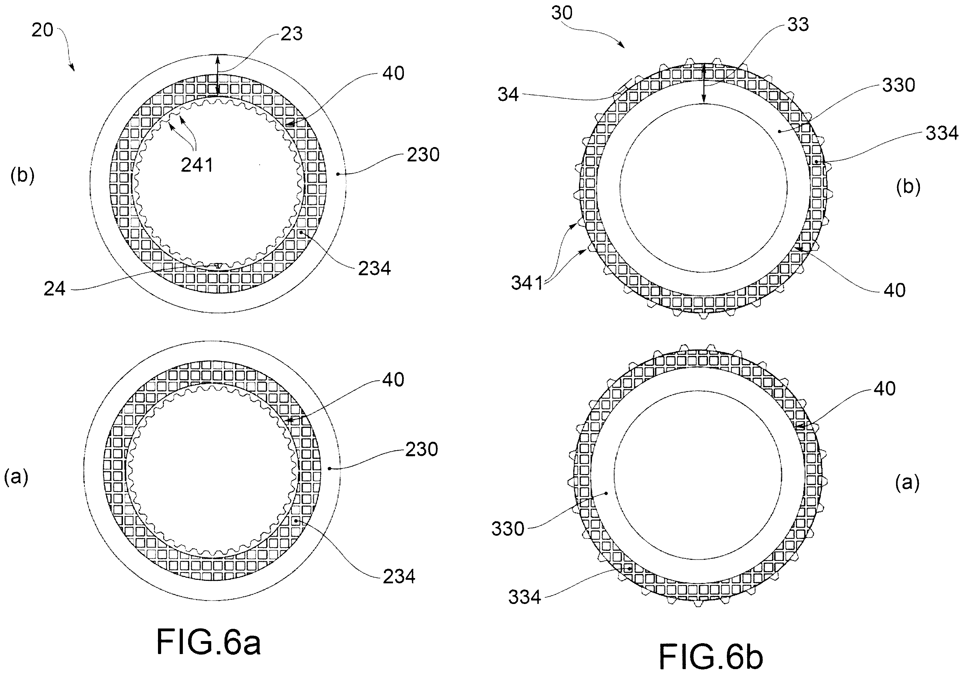

In the embodiment of figures 5B and 6A, the friction zone 234,334 occupies an inner ring of the working portion 23,33, and the free zone 230,330 occupies the remaining outer ring of the working portion 23,33.

In the variant of embodiment of figures 5A and 6B, the friction zone 234,334 occupies an outer ring of the working portion 23,33, and the free zone 230,330 occupies the remaining inner ring of the working portion 23,30.

In the variants of embodiment of figures 2, 3, 5 and 6, the faces A and B of the disc 20,30 are the same, i.e. the friction zones 234,334 occupy the same circumferential position on the sides A and B (either the outer ring as in figures 5A and 6B or the inner ring as in figures 5B and 6A).

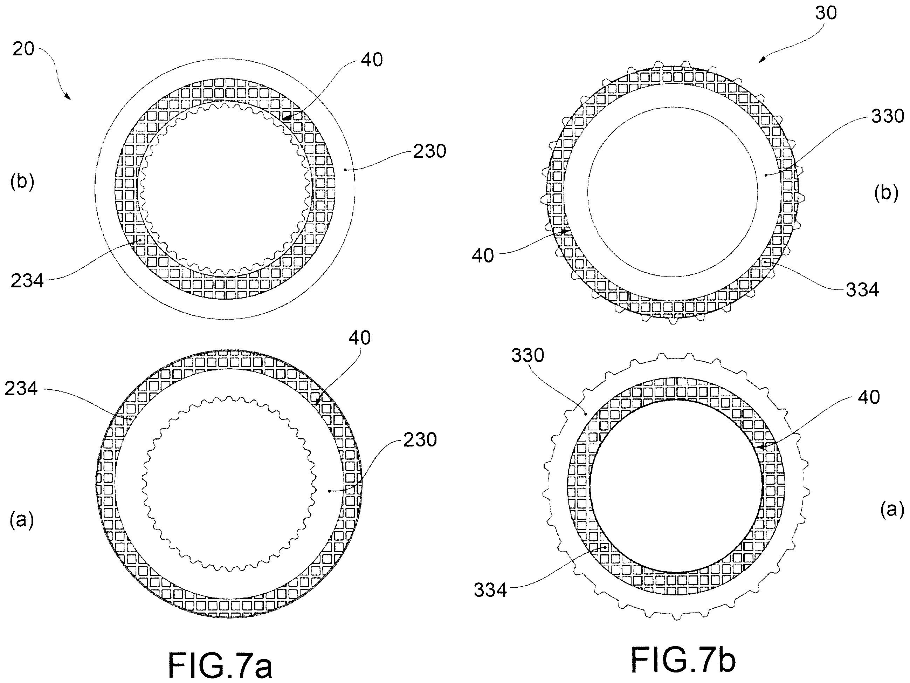

In the variants of embodiment of figures 4 and 7, the faces A and B of the disc 20,30 are different, i.e. the friction zones 234,334 occupy offset circumferential positions on the sides A and B (on one side they occupy the outer ring and on the opposite side the inner ring).

In one embodiment, the body 21 of the driven disc 20 has the same thickness as the body 31 of the driving disc 30; in a different embodiment, the body 21 of the driven disc 20 has a different thickness than that of the body 31 of the driving disc 30.

In one embodiment, the material used for the friction coating 40 is the same on the discs 20,30; in a different embodiment, the driven disc 20 and the driving disc 30 have different materials for the friction coating 40.

In one embodiment, the material used for the friction coating 40 is the same on both sides A and B of the disc 20,30: in a different embodiment, side A and side B of the disc 20,30 have different materials for the friction coating 40.

In the case of a "wet" type clutch assembly, used, for example, in automatic transmissions, the disc pack 10 is immersed in lubricating oil for cooling the friction surfaces. In this case, the friction zone 234,334 of the disc 20,30 is provided with grooves through the friction coating 40 (clearly visible in figures 5 to 7). Various groove models are used on the friction coating 40 of the discs to move the coolant, such as oil, through the coating itself, to remove heat and reduce the temperature gradient.

In one embodiment, the groove pattern (depth, thickness, distribution, number) through the friction coating 40 is the same on the discs 20,30; in a different embodiment, the driven disc 20 and the driving disc 30 have a different groove pattern through the friction coating 40.

In one embodiment, the groove pattern through the friction coating 40 is the same on both sides A and B of the disc 20,30: in a different embodiment, side A and side B of the disc 20,30 have different groove patterns through the friction coating 40.

The discs 20,30 according to the present invention are very different both from the known discs of the double-sided clutch configuration of figure 1A (wherein the friction material 4 is fixed to both sides of the single driven disc 2, while the driving disc 3 is completely devoid thereof), and from the known discs of the single-sided clutch configuration of figure 1B (wherein the friction material 4 is fixed to only one side of the driven disc 2 and only one side of the driving disc 3). Therefore, the configuration of the discs 20,30 according to the present invention is entirely new and could be termed Bi-Friction Coupling.

Summarizing the innovative aspects of this technical solution:
- the friction coating 40 is applied both to the driven disc 20 and to the driving disc 30: both bodies 21 and 31 participate in the thermal dissipation;
- the friction coating 40 is applied to both faces A and B of each disc (whether driven 20 or driving 30); this allows the unidirectionality of the heating, and consequently the deformation of the discs 20,30, to be greatly reduced;
- the friction coating 40 is applied on two concentric sections (friction zone 234,334) one on the driven disc 20 and one on the driving disc 30.

The main benefits provided by a disc pack 10 according to the present invention are:
- space savings, given that it is possible to minimize the length of the disc pack 10;
- a weight reduction of the disc pack 10 (equal to the number of discs);
- an increase in performance given that more disc friction interfaces (at equal spacing) are concentrated in the disc pack 10;
- an oil savings due to the discs reaching a lower temperature due to the improved heat dissipation;
- a lower deformation of the discs due to a reduction in the unidirectional nature of the heat.

The discs 20,30 according to the present invention may also be used as brake discs, in particular for multidisc brake solutions.

Innovatively, a disc pack according to the present invention provides high heat dissipation performance without deformation of the discs, minimizing the axial length of the disc pack itself.

It is clear that one skilled in the art may make modifications to the above-described device, all contained within the scope of protection as defined by the following claims.

## Claims

1. A disc pack (10) for a clutch assembly or multidisc brake, comprising:
- a plurality of driven discs (20), each comprising a metallic body (21) having a working portion (23) adapted to abut against a respective driving disc (30);
- a plurality of driving discs (30) each comprising a metal body (31) having a working portion (33) adapted to abut against a respective driven disc (20); **characterized in that**:
- each working portion (23,33) of the discs comprises a friction zone (234,334) coated by the friction coating (40) and an adjacent free zone 230,330 which is devoid of any friction coating.
- both faces (A, B) both of the driven disc (20) and of the driving disc (30) are provided with a friction zone (234,334) covered by the friction coating (40);
- in a pair composed of a driven disc (20) and a driving disc (30), the respective friction zones (234,334) are arranged offset so that the friction zone (234) of the driven disc (20) faces the free zone (330) of the driving disc (30), and the friction zone (334) of the driving disc (30) faces the free zone (230) of the driven disc (20).

2. A disc pack (10) according to claim 1, wherein the friction zone (234,334) has a circular ring shape.

3. A disc pack (10) according to any one of the preceding claims, wherein the free zone (230,330) has a circular ring shape.

4. A disc pack (10) according to claim 2 or 3, wherein the friction zone (234,334) occupies an inner ring of the working portion (23,33) and the free zone (230,330) occupies a remaining outer ring of the working portion (23,30).

5. A disc pack (10) according to claim 2 or 3, wherein the friction zone (234,334) occupies an outer ring of the working portion (23,33) and the free zone (230,330) occupies a remaining inner ring of the working portion (23,30).

6. A disc pack (10) according to any one of the claims 2 to 5, wherein the faces (A,B) of the disc (20,30) are the same, i.e. the friction zones (234,334) occupy the same circumferential position.

7. A disc pack (10) according to any one of the claims 2 to 5, wherein the faces (A,B) of the disc (20,30) are different, i.e. the friction zones (234,334) occupy offset circumferential positions.

8. A disc pack (10) according to any one of the preceding claims, wherein each disc (20,30) comprises, adjacent to the working zone (23,33), a connecting portion (24,34) provided with teeth (241,231) adapted to hold the disc (20,30) in position in the clutch assembly or multidisc brake.

9. A disc pack (10) according to any one of the preceding claims, wherein the body (21,31) of the disc (20,30) is made of metallic material such as iron or in a metal alloy such as steel or cast iron.

10. A disc pack (10) according to any one of the preceding claims, wherein the friction coating (40) is paper-based, or of an organic material, or of carbon compounds, or of elastomeric or sintered materials (metallic and/or semi-metallic and/or graphite).

11. A disc (20,30) for a disc pack of a clutch assembly or multidisc brake, comprising a metal body (21,31) having:
- a working portion (23,33) adapted to abut against a respective disc (30,20), said working portion (23,33) being provided with a friction zone (234,334) coated with a friction coating (40);
- a connecting portion (24,34) adjacent to the working zone (23,33), provided with teeth (241,231) adapted to hold the disc (20,30) in position in a clutch assembly or in a multidisc brake;
wherein both faces (A,B) of the disc (20,30) are provided with a friction zone (234,334) coated with the friction coating (40);
**characterized in that** said working portion (23,33) further comprises, adjacent to the friction zone (234,334), a free zone (230,330) devoid of friction coating.

12. A disc (20,30) according to claim 11, wherein the friction zone (234,334) and the free zone (230,330) have a circular ring shape.

13. A disc (20,30), according to claim 11 or 12, in the friction zone (234,334) occupies an inner ring of the working portion (23,33) and the free zone (230,330) occupies a remaining outer ring of the working portion (23,30), or vice versa, the friction zone (234,334) occupies an outer ring of the working portion (23,33) and the free zone (230,330) occupies a remaining inner ring of the working portion (23,30).

14. A clutch assembly comprising a disc pack (10) according to any one of claims 1 to 10.

15. A multidisc brake comprising a disc pack (10) according to any one of claims 1 to 10.
